# EUROPEAN PATENT APPLICATION

(11) **EP 4 454 808 A1**
(43) Date of publication of application: **30.10.2024**
(21) Application number: 23170197.0
(22) Date of filing: 26.04.2023
(51) Int. Cl.: B23Q 11/00, B24B 55/06, B25F 5/02, B23D 59/00

(54) **COLLECTION RECEPTACLE FOR WORKPIECE PARTICLES, METHOD FOR OPERATING A COLLECTION RECEPTACLE, AND HANDHELD POWER TOOL ASSEMBLY**

(71) Applicant: Festool GmbH, 73240 Wendlingen am Neckar (DE)
(72) Inventor: Randecker, Andreas, 72581 Dettingen (DE); Seeger, Sebastian, 89537 Giengen and der Brenz (DE)
(74) Representative: Maiwald GmbH

(57) **Abstract**

A collection receptacle (14) for collecting workpiece particles is disclosed. The collection receptacle (14) is configured for coupling to a handheld power tool. The collection receptacle (14) comprises a mechanically rigid receptacle shell (22) having an inlet port on a first side (24) of the receptacle shell (22) and an outlet (28) on a second side of the receptacle shell (30). The rigid receptacle shell (22) delimits a collection volume of the collection receptacle (14). The collection receptacle (14) additionally comprises a filter means (32) being disposed at the outlet (28) and configured to separate workpiece particles from air. Furthermore, the collection receptacle (14) comprises a filter dedusting mechanism (34) configured to remove workpiece particles from the filter means (32), wherein the filter dedusting mechanism (34) is coupled with the filter means (32). Additionally, a method for operating such a collection receptacle (14) is presented. Moreover, a handheld power tool assembly comprising a handheld power tool and a collection receptacle (14) is shown.

## Description

The present invention relates to a collection receptacle for collecting workpiece particles. The collection receptacle is configured for coupling to a handheld power tool. The collection receptacle comprises a mechanically rigid receptacle shell having an inlet port on a first side of the receptacle shell and an outlet on a second side of the receptacle shell. The rigid receptacle shell delimits a collection volume of the collection receptacle. The inlet port is configured to receive a mixture of air and workpiece particles. The outlet is configured to allow air to leave the collection volume delimited by the receptacle shell. The collection receptacle further comprises a filter means being disposed at the outlet. The filter means is configured to separate workpiece particles from air.

The present invention is further directed to a method for operating such a collection receptacle.

Additionally, the present invention relates to a handheld power tool assembly comprising a handheld power tool and a collection receptacle as mentioned above.

Such collection receptacles and handheld power tool assemblies using such collection receptacles are known.

The collection receptacles are used in order to collect workpiece particles. Consequently, the workpiece particles are withheld or withdrawn from both a work zone and a general environment in which the user of the handheld power tool assembly equipped with the collection receptacle and other human beings may be present. Withholding workpiece particles from the general environment renders the environment more comfortable and healthier for a user.

It is an objective of the present invention to further increase the operational reliability of collection receptacles. This means that the portion of workpiece particles which are withheld from the work zone and the general environment shall be increased as compared to known solutions.

According to a first aspect of the invention, there is provided a collection receptacle for collecting workpiece particles. The collection receptacle is configured for coupling to a handheld power tool. The collection receptacle comprises a mechanically rigid receptacle shell having an inlet port on a first side of the receptacle shell and an outlet on a second side of the receptacle shell. The rigid receptacle shell delimits a collection volume of the collection receptacle. Moreover, the receptacle shell is configured to be rigidly or pivotably coupled to the handheld power tool. The inlet port is configured to receive a mixture of air and workpiece particles. The outlet is configured to allow air to leave the collection volume delimited by the receptacle shell. The collection receptacle further comprises a filter means being disposed at the outlet. The filter means is configured to separate workpiece particles from air. Additionally, the collection receptacle comprises a filter dedusting mechanism configured to remove workpiece particles from the filter means. The filter dedusting mechanism is coupled with the filter means. The filter means being disposed at the outlet is arranged such that air may leave the collection receptacle via the outlet and workpiece particles are retained in the collection volume. During operation of the collection receptacle workpiece particles may accumulate on the filter means. This reduces the performance of the filter means since the resistance for air passing through the filter means is increased. Using the filter dedusting mechanism, such workpiece particles may be removed from the filter means. This increases the filtering performance. More generally speaking, using a filter dedusting mechanism increases a portion of workpiece particles that are removed from the work zone and withheld from the general environment by the filter means. Consequently, an environment is kept comfortable and healthy for a user.

In the context of the present invention, the fact that the inlet port is configured to be pivotably coupled to the handheld power tool means that the inlet port is configured to be pivoted with respect to the handheld power tool if the collection receptacle is coupled to the handheld power tool. Thus, the inlet port and the collection receptacle may perform a rotatory movement being defined by one or more specific axes of rotation with respect to the handheld power tool.

Moreover, the collection receptacle according to the present invention is configured to be located in proximity to the handheld power tool to which it may be coupled. In a coupled state of the collection receptacle and the handheld power tool, a distance between the collection volume being defined by the mechanically rigid receptacle shell of the collection receptacle and the handheld power tool is preferably inferior to 30 centimeters. More preferably, the distance between the collection volume and the handheld power tool is inferior to 20 centimeters. Even more preferably, the distance between the collection volume and the handheld power tool is inferior to 10 centimeters.

The collection receptacle according to the present invention may comprise an active suction system. Such a suction system actively pushes or pulls the mixture of air and workpiece particles towards the filter means. Alternatively, the collection receptacle according to the present invention may be a so-called passive system. Such a collection receptacle does not comprise an active suction system. This means that the workpiece particles and air are separated with the aid of the filter, wherein the air and the workpiece particles are subject to a movement by a blower means of the handheld power tool and gravity.

The collection receptacle according to the present invention may be configured to be used in connection with a great variety of power tools. The power tools may be handheld power tool.

In an example, the handheld power tool is a circular hand saw. Alternatively, the handheld power tool is a jigsaw. According to a further alternative, the handheld power tool is a handheld sander.

According to an example, the filter means comprises a sheet-like filter element. The sheet-like filter element is either flat or pleated. The filter element may be made from a paper material or from a textile material. In a case in which the filter element is pleated, the filter element may be provided in an undulated or zig-zag folded shape. Such filter elements provide a reliable filtering functionality. Moreover, such a filter means can be easily adapted to a certain particle size by choosing an appropriate filter element. Moreover, these filter elements are comparatively compact and cost-efficient.

According to an embodiment, the collection receptacle further comprises a suction means configured to suck air and/or workpiece particles from the inlet port towards the outlet. Using such a suction means ensures that workpiece particles are reliably removed from a work zone and collected in the collection receptacle. Due to the pressure provided by the suction means, comparatively small-meshed or small-pored filter means may be used. Altogether, filtering performance is enhanced.

The suction means may be arranged on an external side of the filter means. The dedusting mechanism may comprise a reflow valve being configured to selectively open a bypass flow path by-passing the filter element and fluidically connecting an inlet of the suction means to an environment of the collection receptacle. In this context, the external side of the filter means is the side of the filter means that is oriented into a direction opposite to the inlet port. In other words, the external side of the filter means does not point towards a collection volume of the collection receptacle. Opening the reflow valve fluidically connects the inlet of the suction means to the environment of the collection receptacle. This may lead to a sudden change in the pressure difference over the filter means. This causes the filter means to at least locally move. As a consequence of this comparatively sudden movement, workpiece particles accumulated on the filter means are incited to fall off the filter means. In other words, opening the reflow valve causes a dedusting activity. The operation of the reflow valve may be manual or automatic. In both alternatives, the filter means may be reliably dedusted.

In an example, the reflow valve is spring biased into its closed position. In other words, the reflow valve is a normally closed valve. This means that the reflow valve needs to be opened by actively applying an opening force. Once the opening force is withdrawn, the reflow valve closes. This configuration allows to periodically open and close the reflow valve, thereby subjecting the filter means to a periodic movement such as a vibration movement. This leads to very thorough dedusting of the filter element.

The reflow valve may be coupled with an electric valve actuator. In an example, the electric valve actuator is an electromagnetic actuator. Consequently, the reflow valve may be actuated in an automatic manner. Moreover, using such an electric valve actuator, the reflow valve may be opened and closed comparatively quickly. This improves the dedusting performance.

In an embodiment, the receptacle shell comprises a lid for selectively accessing the filter means. At least one of the reflow valve and the electric valve actuator is arranged on the lid. In more general terms, the lid may be considered as a portion of the receptacle shell that may be moved independently from the remaining portions of the receptacle shell. This allows to easily access the filter means, if needed. Moreover, in this configuration, the reflow valve and the electric valve actuator are arranged on an opposite side of the filter means as compared to the collection volume. This means that the reflow valve and the electric valve actuator are subject to comparatively few workpiece particles. This allows the reflow valve and the electric valve actuator to be operated in a reliable manner.

The filter dedusting mechanism may comprise an excitation element configured to at least locally contact the filter means and at least locally subject the filter means to a mechanical excitation and/or movement. Consequently, the excitation element is movable with respect to the filter means. When moving the excitation element, the filter means is subject to an excitation and/or a movement by the excitation element. Thereby, the filter is dedusted. This is a comparatively simple and reliable way to dedust the filter means.

Preferably, the excitation element is moved in parallel or perpendicular to a filter plane being defined by the general extension of the filter element. In a case in which the excitation element is moved in parallel to the filter plane, the filter element is dedusted by sweeping the excitation element along the filter plane. In a case in which the excitation element is moved perpendicular to the filter plane, the excitation element pushes or knocks on the filter element. Both alternatives allow for reliable dedusting.

According to an example, the excitation element may be coupled to a linear guiding means. In this case, the excitation element is translatorily movable with respect to the filter means. This is a structurally simple and reliable configuration of the excitation element. Thus, the filter means may be thoroughly dedusted.

In an example, the excitation element is manually movable along the linear guiding means. Thus, the filter means may be dedusted in a manual manner by operating the excitation element.

The excitation element may extend over at least 80% of a width of the filter means. This means that the excitation element may cover a comparatively big portion of the filter means when being moved. Consequently, a comparatively big portion of the filter means may be subject to an at least local movement by the excitation element. Altogether, a big portion of the filter means may be dedusted in a reliable manner.

In an example, the excitation element comprises at least one protrusion configured for selectively contacting the filter means. Optionally, the at least one protrusion is supported in a resilient manner. Such a protrusion allows to subject the filter means to a well-defined local movement thereby ensuring that the filter is reliably dedusted.

In an alternative, the excitation element comprises two or more protrusions which are arranged behind one another along a direction of the linear guide. This allows for very reliable dedusting.

In an example, the protrusion has the form of a bristle. In such a case, the excitation element may be called a brush element.

The excitation element may be coupled to a gripping means for manually actuating the excitation element. Thus, a user of the collection receptacle may dedust the filter means in a comfortable and reliable manner. Moreover, due to the gripping means, dedusting is comparatively simple.

According to a variant, the receptacle shell comprises a lid for selectively accessing the filter means. At least one of the excitation element and the gripping means is arranged on the lid. In a case in which the excitation element is coupled to a linear guiding means, also the linear guiding means may be arranged on the lid. The lid protects the excitation element and the gripping means from undesired contact with workpiece particles. The same applies to the linear guiding means, if a linear guiding means is arranged on the lid. Consequently, these components have a comparatively long service life. In a case in which the linear guiding means, the excitation element and/or the gripping means need to be exchanged, they are easily accessible.

According to a second aspect of the present invention, there is provided a method for operating a collection receptacle according to the present invention. The method comprises:
- detecting that a dedusting criterion is fulfilled, and
- triggering an operation of the dedusting mechanism or operating the dedusting mechanism.

As has been mentioned before, dedusting the filter means eliminates accumulated workpiece particles from the filter means. This increases the filtering performance. More generally speaking, dedusting the filter means increases a portion of workpiece particles that are removed from the work zone and the general environment and captured by the filter means. Consequently, an environment is kept comfortable and healthy for a user.

The dedusting criterion may comprise at least one of:
- a pressure difference over the filter means exceeding a predefined pressure threshold,
- an operation time of the collection receptacle exceeding a predefined time threshold,
- a volumetric flow rate over the filter means dropping below a predefined flow rate threshold, and
- a filtering performance of the filter means dropping below a predefined filtering performance threshold.

In this context, the operation time of the collection receptacle may correspond to an operation time of the handheld power tool to which the collection receptacle is connected. A filtering performance is to be understood as an indicator of a portion of workpiece particles being removed by the filter means. The above criteria may be adapted to a specific handheld power tool to which the collection receptacle is coupled. Thus, it is ensured that the filter means is dedusted in time such that a high filtering performance is ensured.

According to a third aspect of the present invention, there is provided a handheld power tool assembly comprising a handheld power tool and a collection receptacle according to the present invention. Due to the fact that the collection receptacle has a high filtering performance, a comparatively big portion of workpiece particles are removed from the work zone and the general environment by the filter means. Consequently, an environment is kept comfortable and healthy for a user. Altogether, such a handheld power tool assembly may be operated in a comparatively clean manner.

The handheld power tool may comprise a battery unit for powering at least the handheld power tool. Such a handheld power tool may be used independent from a stationary source of electricity. Additionally, such a handheld power tool is free from a cabled connection to a stationary source of electricity. Thus, the handheld power tool can be handled flexibly and freely.

In a case in which the collection receptacle comprises an active suction means, the collection receptacle may comprise an energy source, e.g. a battery, which is separate from the battery unit of the handheld power tool. Alternatively, the collection receptacle can be electrically coupled to the handheld power tool such that the battery unit of the handheld power tool may supply electric energy to the collection receptacle as well.

In the alternative in which the collection receptacle comprises an energy source, the energy source may be arranged at a back side of the receptacle shell, i.e. at a side of the receptacle shell being located opposite the inlet port. In this configuration, the energy source is easily accessible, even if the collection receptacle is coupled to the handheld power tool.

Furthermore, in the alternative in which the collection receptacle comprises an energy source, the energy source may be arranged at a lateral side of the receptacle shell. The lateral side is defined with respect to a standard working direction. Also in this configuration, the energy source is easily accessible, even if the collection receptacle is coupled to the handheld power tool. Optionally, an energy source may be arranged on both lateral sides of the receptacle shell. This has the effect that a comparatively large energy capacity may be provided and that the receptacle shell is mechanically balanced.

Moreover, also in the alternative in which the collection receptacle comprises an energy source, the energy source may be arranged at the first side of the receptacle shell, i.e. on the same side of the receptacle shell as the inlet port. Also in this configuration, the energy source is easily accessible. Moreover, a weight of the energy source may be reliably supported on the handheld power tool if the collection receptacle is coupled to the handheld power tool. This is due to the fact that the energy source is located close to the handheld power tool.

In all of the above variants of the alternative concerning the collection receptacle with an energy source, the energy source may form part of an energy source module with is removably coupled to the receptacle shell. Thus, the energy source module can be selectively attached to the receptacle shell and selectively detached from the receptacle shell. This allows to replace an exhausted energy source module by a fully charged energy source module. In a special case, the energy source module may be slidingly attached to the receptacle shell and slidingly detached from the receptacle shell.

According to a fourth aspect of the present invention, there is provided a collection receptacle for collecting workpiece particles. The collection receptacle is configured for coupling to a handheld power tool. The collection receptacle comprises a receptacle shell having an inlet port on a first side of the receptacle shell and an outlet on a second side of the receptacle shell. The receptacle shell delimits a collection volume of the collection receptacle. Moreover, the receptacle shell is configured to be rigidly or pivotably coupled to the handheld power tool. The inlet port is configured to receive a mixture of air and workpiece particles. The outlet is configured to allow air to leave the collection volume delimited by the receptacle shell. Moreover, the collection receptacle comprises an energy source module with an electric battery. The energy source module is configured to provide electric energy to one or more components of the collection receptacle.

It should be noted that the above examples may be combined with each other irrespective of the aspect of the invention involved.

These and other aspects of the present invention will become apparent from and elucidated with reference to the examples described hereinafter. Examples of the invention will be described in the following with reference to the drawings.
- Figure 1: shows a handheld power tool system comprising a particle collection assembly and a handheld power tool, wherein the particle collection assembly comprises a guide rail and a collection receptacle and wherein the collection receptacle and the handheld power tool form a handheld power tool assembly,
- Figure 2: shows the collection receptacle of Figure 1 in a separate representation,
- Figure 3: shows the collection receptacle of Figure 2, wherein portion of a lid is in an open state,
- Figure 4: shows the collection receptacle of Figures 1 to 3 in a cross sectional view in plane IV of Figure 2,
- Figure 5: illustrates an operation of a dedusting mechanism of the collection receptacle of Figures 1 to 4, wherein the collection receptacle is connected to the handheld power tool,
- Figure 6: shows a handheld power tool assembly comprising a collection receptacle according to a further embodiment,
- Figure 7: shows a detail VII of the collection receptacle of Figure 2, wherein an inlet port of the collection receptacle is open,
- Figure 8: shows the same detail VII of the collection receptacle of Figure 2, wherein the inlet port of the collection receptacle is closed,
- Figure 9: shows the collection receptacle of Figures 7 and 8 in a cross sectional view along plane IX-IX in Figure 8,
- Figure 10: shows an interior of the collection receptacle of Figures 1 to 9 along a direction X in Figure 9,
- Figure 11: shows an interior of a collection receptacle according to two other embodiments along a direction X in Figure 9,
- Figure 12: shows a further detail XII of the collection receptacle of Figure 2,
- Figure 13: illustrates a method for uncoupling the collection receptacle from the handheld power tool and a method for coupling the collection receptacle to the handheld power tool,
- Figure 14: shows examples of a collection receptacle, wherein a connection ring and a closure element are movably coupled,
- Figure 15: shows the collection receptacle of Figure 2 in a simplified representation, wherein a lid part of the collection receptacle is in a closed position,
- Figure 16: shows the collection receptacle of Figure 15, wherein the lid part of the collection receptacle is in an open position,
- Figure 17: shows another embodiment of the collection receptacle, wherein a lid part of the collection receptacle is in a closed position,
- Figure 18: shows the collection receptacle of Figure 17, wherein the lid part of the collection receptacle is in an open position,
- Figure 19: shows a detail of the collection receptacles of Figure 15 and Figure 17 in a sectional view along plane XVIII in Figure 15 and Figure 17,
- Figure 20: shows an alternative detail of the collection receptacle of Figure 15 and Figure 17,
- Figure 21: shows a handheld power tool system comprising a collection receptacle according to a further embodiment,
- Figure 22: shows a handheld power tool assembly comprising a collection receptacle according to another embodiment,
- Figure 23: shows a handheld power tool assembly comprising a collection receptacle according to still another embodiment,
- Figure 24: shows a collection receptacle according to another embodiment, and
- Figure 25: shows a collection receptacle according to still another embodiment.

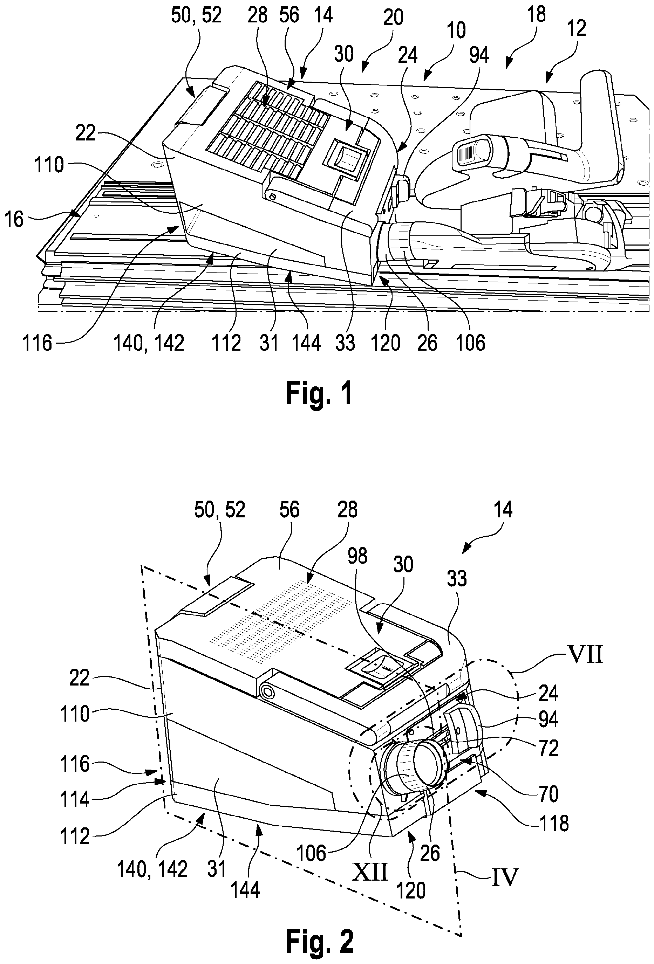

Figure 1 shows a handheld power tool system 10.

The handheld power tool system 10 comprises a handheld power tool 12, a collection receptacle 14 for collecting workpiece particles, and a guide rail 16.

The collection receptacle 14 is coupled to the handheld power tool 12 such that workpiece particles resulting from an operation of the handheld power tool 12 can be collected by the collection receptacle 14.

From a mechanical point of view, the collection receptacle 14 and the handheld power tool 12 may be rotated relative to one another around an axis of rotation coinciding with a middle axis of an inlet port 26 of the collection receptacle 14. Otherwise, the collection receptacle 14 and the handheld power tool 12 are rigidly connected. This means that the mentioned rotation is the only degree of freedom that can be used for a relative movement between the collection receptacle and the handheld power tool 12.

Moreover, a distance between a collection volume in the interior of the collection receptacle 14 and the handheld power tool 12 is inferior to 10 centimeters. Thus, the collection receptacle 12 is provided in close proximity to the handheld power tool 12.

Moreover, as will be explained in further detail below, the guide rail 16 is used for supporting the collection receptacle 14.

In this context, the handheld power tool 12 and the collection receptacle 14 together form a handheld power tool assembly 18.

The collection receptacle 14 and the guide rail 16 may be referred to as a particle collection assembly 20.

In the example of Figure 1, the handheld power tool 12 is a circular hand saw. It is understood that this is just an example of a handheld power tool 12 and the handheld power tool 12 may be any other type of a handheld power tool, such as a handheld sander or a handheld router.

The collection receptacle 14 is shown in more detail in Figure 2.

The collection receptacle 14 is generally prism-shaped and comprises a mechanically rigid receptacle shell 22.

The receptacle shell 22 encloses a collection volume of the collection receptacle 14. In other words, workpiece particles may be collected in the interior of the receptacle shell 22.

The collection volume has a capacity of three liters or more.

On a first side 24 of the receptacle shell 22, there is provided an inlet port 26. The inlet port 26 is configured to be coupled to the handheld power tool 12 as shown in Figure 1. Moreover, the inlet port 26 is configured to receive a mixture of air and workpiece particles resulting from an operation performed by the handheld power tool.

The inlet port 26 is formed as a short feed pipe.

In the examples shown in the Figures, the first side 24 of the receptacle shell 22 is the side of the receptacle shell 22 being oriented towards the handheld power tool 12.

An outlet 28 is provided on a second side 30 of the receptacle shell 22.

In the present example, the second side 30 is facing upwards in an operational position of the collection receptacle 14. Thus, the first side 24 and the second side 30 share a common edge.

An operational position of the collection receptacle 14 is a position in which the collection receptacle 14 is coupled or couplable to the handheld power tool 12, wherein the power tool is oriented such that is can perform its task. If the receptacle 14 is coupled to the handheld power tool 12, the receptacle 14 may be moved together with the handheld power tool 12.

The outlet 28 is configured to allow air to leave the receptacle shell 22.

In the present example, the outlet 28 has the form of a grid. The outlet 28, thus, comprises a plurality of openings which are distributed over a portion of the second side 30.

Additionally, the receptacle shell 22 comprises a transparent section 31. A user of the collection receptacle 14 can see through this transparent section 31 allowing a user to estimate an amount of workpiece particles that has been accumulated in the collection volume.

The transparent section 31 may also be called a window.

Furthermore, a handle 33 is pivotably supported on the receptacle shell 22.

The pivotable handle 33 can be selectively positioned such that it is flush with an outer contour of the receptacle shell 22. This means that the handle 33 does not protrude beyond the outer contour of the receptacle shell 22. In order to manipulate the collection receptacle 12, the handle 33 can be pivoted upwards such that it can be easily grasped by a human hand.

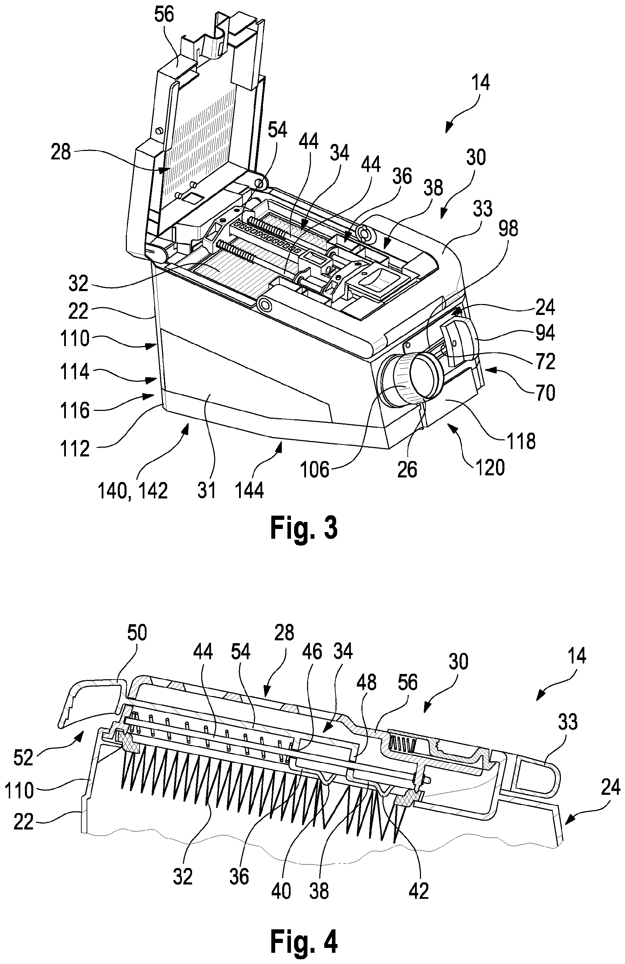

In order to ensure a high performance of the collection receptacle 14, i.e. to ensure that a big portion of the workpiece particles is kept inside the collection volume and does not leave the collection receptacle 14 via the outlet 28 or in any other manner, the collection receptacle 14 comprises a filter means 32 (cf. Figures 3 and 4).

The filter means 32 is disposed at the outlet 28. This means that the filter means 32 is arranged between the outlet 28 and the collection volume. In other words, the filter means 32 is located on an inner side of the outlet 28. The filter means 32 extends over the outlet 28.

The filter means 32 is configured to separate workpiece particles from air. Thus, pores of the filter means 32 are sized such that air can pass, but workpiece particles are too big to pass.

In the present example, the filter means 32 comprises a sheet-like filter element which is pleated (see especially Figure 4). The filter element may be made from a paper material.

The collection receptacle 14 additionally comprises a filter dedusting mechanism 34.

In the examples of Figures 3 to 5, the filter dedusting mechanism 34 is a manual filter dedusting mechanism 34.

The filter dedusting mechanism 34 is configured to remove workpiece particles from the filter means 32. The filter dedusting mechanism 34 is coupled with the filter means 32 to this end.

In the example of Figures 3 to 5, the filter dedusting mechanism 34 comprises a first excitation element 36 and a second excitation element 38.

The first excitation element 36 comprises a first protrusion 40 and the second excitation element 38 comprises a second protrusion 42.

Both the first protrusion 40 and the second protrusion 42 contact the filter means 32 or are configured to contact the filter means 32.

More precisely, both the first protrusion 40 and the second protrusion 42 extend into a region of the filter means 32 and, thus, are configured to contact the filter means 32 on a side opposing the collection volume. The first protrusion 40 and the second protrusion 42 are configured to contact the creases of the pleated filter element.

Additionally, both the first excitation element 36 and the second excitation element 38 and, thus, also the first protrusion 40 and the second protrusion 42, extend substantially over the entire width of the filter means 32.

Additionally, the first excitation element 36 and the second excitation element 38 are coupled to a linear guiding means.

In the present example, the linear guiding means comprises two linear guiding rods 44 which extend through corresponding openings 46, 48 in the first excitation element 36 and the second excitation element 38.

The linear guiding rods 44 extend along a longitudinal direction of the collection receptacle 14. This means that the linear guiding rods 44 extend in a direction away from the first side 24 of the receptacle shell 22 and/or along the second side 30 of the receptacle shell 22.

Both the first excitation element 36 and the second excitation element 38 are coupled to a common gripping means 50.

The gripping means 50 comprises a gripping portion 52 which is configured for being gripped by a human hand and an actuation rod portion 54.

The gripping portion 52 and the actuation rod portion 54 are fixedly connected to one another or formed integrally. The actuation rod portion 54 is fixedly connected to both the first excitation element 36 and the second excitation element 38.

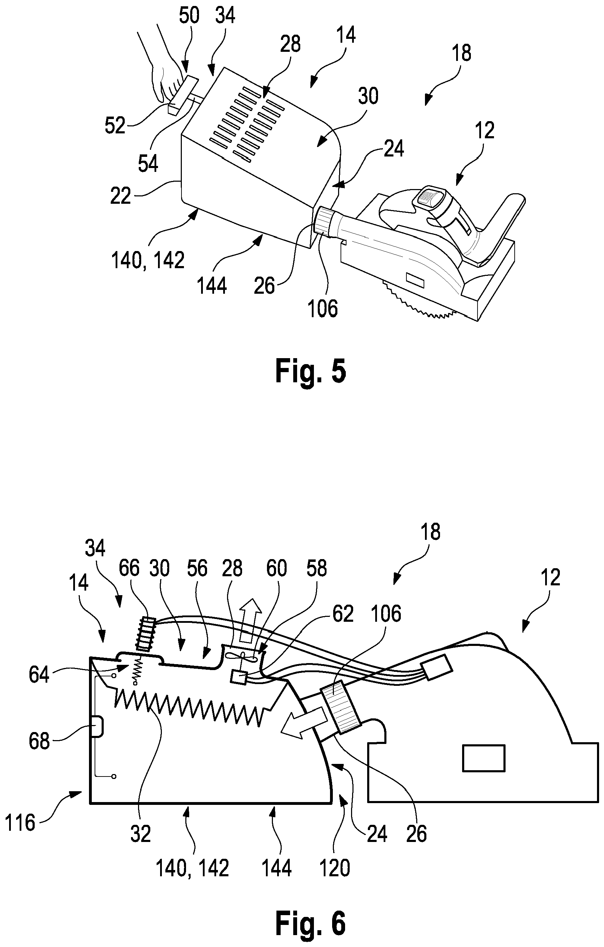

Consequently, the excitation elements 36, 38 may be manually moved along the linear guiding means, i.e. the linear guiding rods 44, by pushing and/or pulling the gripping portion 52 (see especially Figures 4 and 5 in combination).

While moving along the linear guiding means, the first excitation element 36 and the second excitation element 38 stroke or impact the filter means 32, in particular the creases of the pleated filter. Thereby the filter means 32 is subjected to mechanical excitation, i.e. the filter means 32 is subject to a movement. As a consequence of this mechanical excitation, workpiece particles sticking to the filter means 32 may be separated from the filter means 32.

In the collection receptacle 14 of the present example, the linear guiding rods 44, i.e. the linear guiding means, the gripping means 50 and the excitation elements 36, 38 are supported on a lid 56 of the receptacle shell 22.

The lid 56 may be pivoted between a closed position and an open position. In an open position of the lid 56, the filter means 32 is accessible, for example for exchanging the filter means 32. In other words, the filter means 32 may be selectively accessed via the lid 56.

In Figure 3, the lid 56 is shown in an open position, however in contrast to reality and for better visibility only, the linear guiding means, the gripping means 50 and the excitation elements 36, 38 are shown as if the lid 56 were in its closed position.

It is noted that the collection receptacle as shown in Figures 1 to 5 is completely passive. This means that the collection receptacle 14 requires an external mechanism, e.g. located in the handheld power tool 12, to produce a pressure difference that allows for a dust-laden air flow to be driven from the inlet port 26 through the filter means 32 to the outlet 28.

This also applies to a method for operating the collection receptacle 14.

According to a first step of this method, it is detected that a dedusting criterion is fulfilled.

The dedusting criterion may for example relate to an operation time of the collection receptacle 14 exceeding a predefined time threshold. Alternatively, the dedusting criterion may relate to a filtering performance of the filter means 32 dropping below a predefined filtering performance threshold. This may be visually indicated, and hence noticed by a user of the collection receptacle 14.

Based thereon, in a second step, the dedusting mechanism 34 is operated as has been explained above.

Figure 6 shows a handheld power tool assembly 18 with a collection receptacle 14 according to another embodiment. In the following, only the differences with respect to the embodiments as mentioned before will be explained.

The collection receptacle 14 of Figure 6 comprises a suction means 58 configured to suck air and/or workpiece particles from the inlet port 26 towards the outlet 28.

In the present example, the suction means 58 comprises a fan 60 being arranged on the second side 30 of the receptacle shell 22. This fan 60 is configured to suck air out of the collection volume.

The fan is powered by an electric motor 62.

Moreover, the suction means 58, i.e. the fan 60, is arranged on an external side of the filter means 32.

This means that the collection volume and the suction means 58 are arranged on opposite sides of the filter means 32.

Consequently, the suction means 58 may pull air from the collection volume through the filter means 32.

Also in the example of Figure 6, the collection receptacle 14 comprises a dedusting mechanism 34. However, in contrast to the previous embodiments, the dedusting mechanism 34 of the embodiment of Figure 6 is automatic.

The dedusting mechanism 34 comprises a reflow valve 64 and a corresponding electric valve actuator 66.

Using the electric valve actuator 66, the reflow valve 64 may be selectively transferred from a closed state into an open state. In its open state, the reflow valve 64 opens a bypass flow path which by-passes the filter means and fluidically connects an inlet of the suction means 58 to an environment of the collection receptacle 14.

Thus, opening the reflow valve 64 leads to a sudden change of a pressure difference over the filter means 32. This has the effect that the filter means 32 is subject to a sudden movement which makes workpiece particles fall off the filter means 32.

In this context, the reflow valve 64 may be opened in a periodic manner by the electric valve actuator 66. As a consequence thereof, the filter means 32 may vibrate. This leads to a very thorough dedusting of the filter means 32.

Also in the embodiment of Figure 6, the collection receptacle comprises a lid 56. As before, the lid 56 is configured for being pivoted between an open state and a closed state. By putting the lid 56 in the open state, the filter means 32 may be selectively accessed.

The reflow valve 64, the valve actuator 66 and the suction means 58 are arranged on the lid 56.

It is noted that in the example of Figure 6, both the electric valve actuator 66 and the electric motor 62 are supplied with electric power from the handheld power tool 12. The electric power may be drawn from the battery of the electric power tool.

Also the collection receptacle 14 according to Figure 6 may be operated in accordance with the method for operating a collection receptacle 14.

As before, in a first step, it is detected that a dedusting criterion is fulfilled.

In a second step, the operation of the dedusting mechanism is triggered. This means that the electric valve actuator 66 is operated such that the reflow valve 64 is transferred into its open state.

In the example of Figure 6, a great variety of dedusting criteria may be used when performing this method.

A first criterion relates to an operation time of the collection receptacle 14 exceeding a predefined time threshold. In other words, the reflow valve 64 is opened after the lapse of a certain time span in order to dedust the filter means 32.

Alternatively, the collection receptacle 14 may comprise a pressure sensor 68 and the criterion relates to a pressure difference over the filter means 32 exceeding a predefined pressure threshold.

In a further alternative, the collection receptacle 14 may comprise a volumetric flow sensor and the criterion relates to a volumetric flow rate over the filter means 32 dropping below a predefined flow rate threshold.

According to still another alternative, the collection receptacle 14 may comprise a sensor for measuring filtering performance. In this case, the criterion may relate to a filtering performance of the filter means 32 dropping below a predefined filtering performance threshold.

In all of the above examples, the filter means 32 may be reliably dedusted. Consequently, a comparatively big portion of the workpiece particles may be collected in the collection volume of the collection receptacle 14. In other words, the filter element of the filter means 32 may be used for a comparatively long time and/or the collection container may reliably filter the mixture of air and workpiece particles resulting from an operation of the handheld power tool 12.

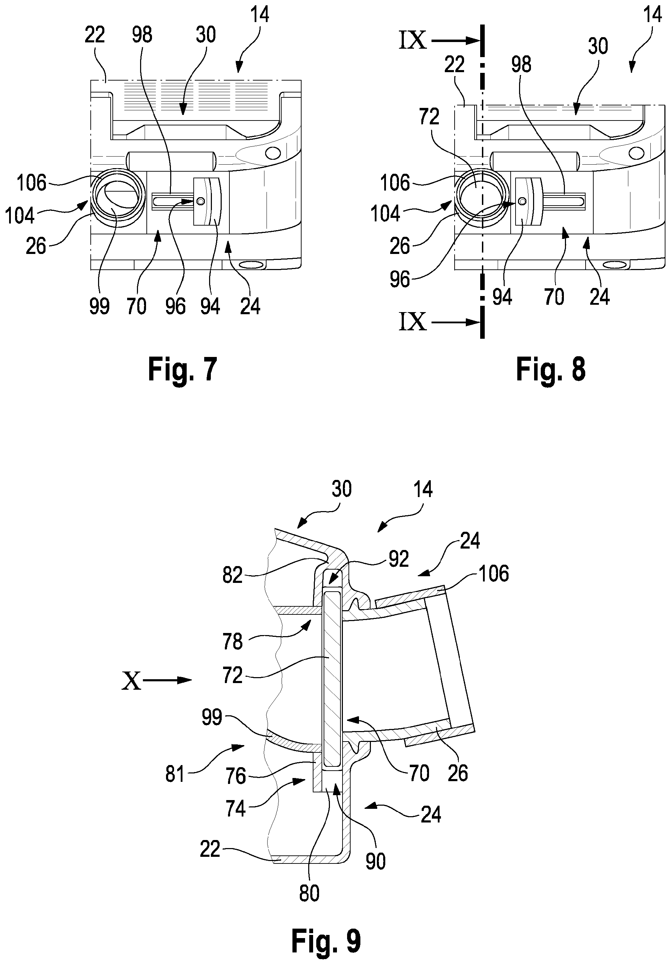

Figures 7 and 8 show a portion of the collection receptacle 14 comprising the inlet port 26.

As can be seen from these Figures, the collection receptacle 14 comprises a closure mechanism 70. The closure mechanism 70 comprises a closure element 72 supported on the receptacle shell 22.

Using the closure element 72, the inlet port 26 may be selectively opened and closed.

The closure element 72 is substantially plate-shaped. Thus, the closure element 72 extends in a plane being defined by its plate-shape.

When moving the closure element 72 in order to selectively open and close the inlet port 26, the closure element 72 is moved within the plane being defined by its plate-shape.

This plane may also be referred to as a sealing plane.

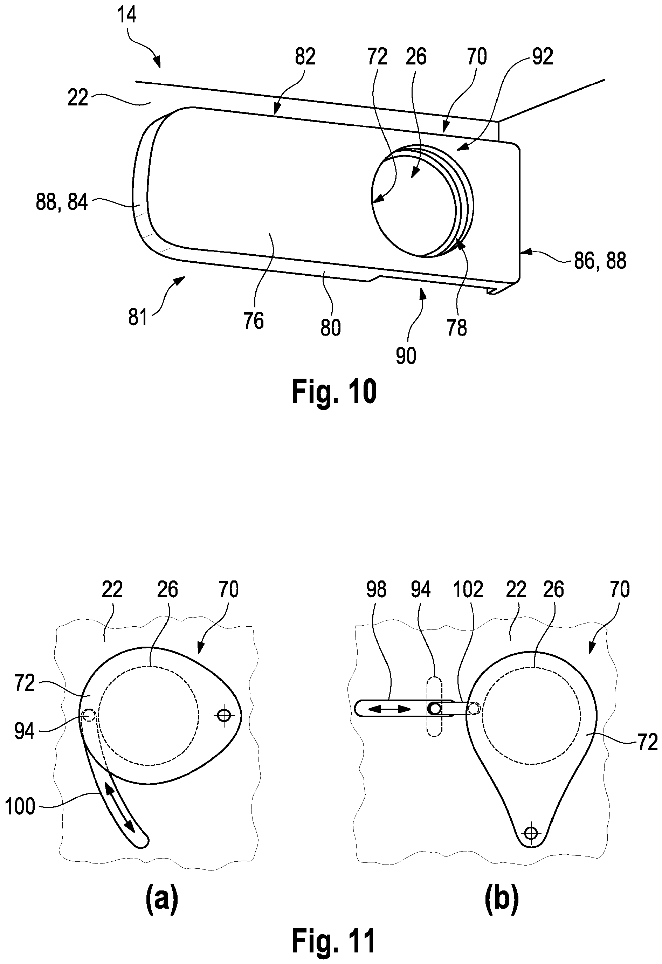

Moreover, the closure element 72 is arranged in a closure element housing 74 which is arranged on an inner side of the receptacle shell 22. More precisely, the closure element housing 74 is arranged on an inner side of the receptacle shell 22 corresponding to the first side 24 of the receptacle shell 22. In simplified words, the closure element housing 74 is arranged at an inner side of the inlet port 26 (cf. Figures 9 and 10).

The closure element housing 74 comprises a main wall 76 which is arranged in parallel to the first side 24 of the receptacle shell 22. However, the main wall 76 is arranged at a distance from the receptacle shell 22.

The main wall 76 is substantially rectangular.

The distance between the receptacle shell 22 and the main wall 76 substantially corresponds to a thickness of the closure element 72.

As can best be seen in Figure 9, the closure element 72 is arranged between the main wall 76 and the receptacle shell 22.

The main wall 76 extends over the inlet port 26. However, there is provided an opening 78 in the main wall 76 being substantially congruent to the inlet port 26.

The closure element housing 74 additionally comprises four lateral walls which all extend between the main wall 76 and the receptacle shell 22.

A lower lateral wall 80 is arranged at the bottom of the closure element 72 if the collection receptacle 14 is in an operational position. The lower lateral wall 80 slidingly supports the closure element 72.

Consequently, the lower lateral wall 80 and the main wall 76 form a guiding means 81 for the closure element 72.

Opposite the lower lateral wall 80, an upper lateral wall 82 is provided.

Together, the upper lateral wall 82 and the lower lateral wall 80 define a space for the closure element 72 along a vertical direction.

On the remaining sides of the main wall 76, a left lateral wall 84 and a right lateral wall 86 are provided. In this context, the designations as left and right are defined with reference to a work flow direction of the collection receptacle 14 and the handheld power tool 12 to which the collection receptacle 14 is coupled. The workflow direction extends in parallel to a longitudinal direction of the collection receptacle 14.

Both the left lateral wall 84 and the right lateral wall 86 form abutment means 88 for the closure element 72.

This means that both the left lateral wall 84 and the right lateral wall 86 are configured to limit a range of motion of the closure element 72 on the lower natural wall 80. This applies to a horizontal direction.

As has been mentioned before, the inlet port 26 is configured for receiving a mixture of air and workpiece particles. This means that both the closure element 72 and the closure element housing 74 may be in contact with workpiece particles.

In order to make sure that these workpiece particles do not hinder a relative movement of the closure element 72 with respect to the closure element housing 74 and the receptacle shell 22, a particle removal opening 90 is provided on the closure element housing 74.

More precisely, the particle removal opening 90 is arranged in the lower lateral wall 80 at a position adjacent to the inlet port 26.

Consequently, in a case in which the closure element 72 is sliding from an open position towards a closed position while workpiece particles are located within the closure element housing 74, these workpiece particles may be pushed out of the closure element housing 74 through the particle removal opening 90.

Moreover, on a radially opposite side of the inlet port 26 with respect to the particle removal opening 90, a pocket 92 is provided. Consequently, the pocket 92 is also provided adjacent to the inlet port 26.

This pocket 92 is formed on the upper lateral wall 82.

The pocket 92 fulfills a similar function as the particle removal opening 90.

In a case in which the closure element 72 is sliding from an open position towards a closed position while workpiece particles are located within the closure element housing 74, these workpiece particles may be obstructing the motion of the closure element 72. However, these workpiece particles may be pushed into the pocket 92 by the movement of the closure element 72. Consequently, despite the presence of workpiece particles, the closure element 72 may be moved into the closed position.

In other words, the pocket 92 is configured to receive workpiece particles.

In the example shown in Figures 7 to 10, the closure mechanism 70 may be operated manually.

To this end, the closure mechanism 70 comprises a gripping means 94.

The gripping means 94 is fixedly connected to the closure element 72 via a connection portion 96 thereof.

As has been explained before, the closure element 72 is arranged inside the receptacle shell 22.

In contrast thereto, the gripping means 94 is arranged on an outside of the receptacle shell 22 such that it is accessible by a hand of a user of the collection receptacle 14.

The receptacle shell 22 comprises an opening in the form of an oblong hole 98 in the region of the closure element 72. The connection portion 96 extends through this oblong hole 98.

Consequently, the closure element 72 may be translated between its open position and its closed position by manually moving the gripping means 94 along the oblong hole 98. The same is true for a translation of the closure element 72 between its closed position and its open position.

Beyond that, Figures 7 and 9 show a flow diverter 99 which is arranged adjacent to the inlet port 26. The flow diverter 99 is configured for guiding a flow of a mixture of air and workpiece particles towards a center portion of the collection volume. In other words, using the flow diverter has the effect that not all workpiece particles accumulate in a portion of the collection volume being directly adjacent to the inlet port 26.

Figure 11 shows two alternative closure mechanisms 70. In the following, only the difference with respect to the closure mechanism 70 as described above will be explained.

In both alternatives of Figure 11, the closure element 72 is pivotably supported on an inside of the receptacle shell 22.

In the alternative of Figure 11 (a), the gripping means 94 is pin-shaped and extends through a curved oblong hole 100 in the receptacle shell 22.

Thus, for moving the closure element 72 between its closed position and its open position, the pin-shaped gripping means 94 needs to be moved along the curved oblong hole 100 (cf. arrow in Figure 11 (a)).

A centerline of the curved oblong hole 100 corresponds to a portion of a circle around the pivoting point of the closure element 72.

In the alternative of Figure 11 (b), the gripping means 94 substantially corresponds to the gripping means 94 of the alternative of Figures 7 to 10. As before, the gripping means 94 is slidable along the oblong hole 98.

However, since now the closure element 72 is pivotably connected to the receptacle shell, the gripping means 94 is connected to the closure element 72 via a connection arm 102. The connection arm 102 is pivotably connected to both the closure element 72 and the gripping means 94.

Consequently, the closure element 72 may be pivoted between its open position and its closed position by translatorily moving the gripping means 94 along the oblong hole 98.

It is understood that in an alternative, the closure mechanism 70 may be an automatic mechanism. This means that the closure element 72 may be automatically movable. In this case, the closure mechanism 70 comprises an actuator which is operationally coupled to the closure element 72 in order to move the closure element 72 from a closed position into an open position and vice versa.

In this alternative, the closure mechanism 70 may additionally comprise a sensing means. The sensing means may be configured to detect a coupled state in which the collection receptacle 14 is coupled to a handheld power tool 12 and to detect an uncoupled state in which the collection receptacle 14 is separated from the handheld power tool 12. Consequently, based on a detection result of the sensing means, the closure element 72 may be automatically moved into its closed position if the collection receptacle 14 is uncoupled from the handheld power tool 12. In situations in which the collection receptacle 14 is coupled to the handheld power tool, the closure element may be automatically moved into its open position.

Additionally or alternatively, the sensing means may be configured to detect an actuation of the connection mechanism, wherein the connection mechanism is configured to selectively couple the collection receptacle 14 to the handheld power tool 12. More precisely, using such a connection mechanism, the inlet port 26 of the collection receptacle 14 may be connected to the handheld power tool 12.

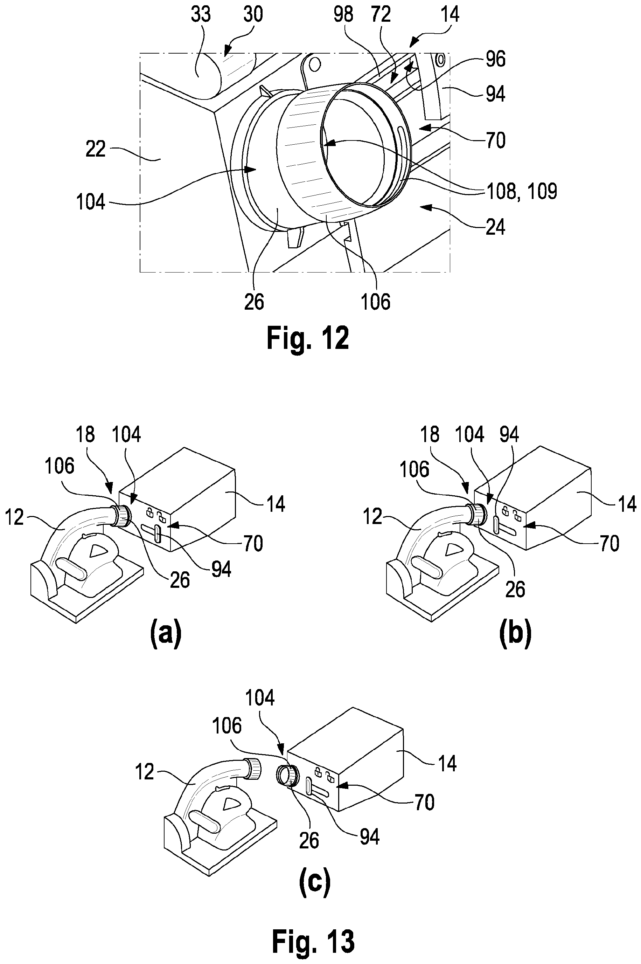

The connection mechanism 104 of the collection receptacle 14 is shown in the detailed view of Figure 12.

The connection mechanism 104 comprises a connection ring 106.

The connection ring 106 is axially fixed on the inlet port 26, but rotatable with respect to the receptacle shell 22 and, thus, also the inlet port 26.

At its radially inner side, the connection ring 106 comprises an engagement feature 108. In the present example, the engagement feature 108 comprises two engagement protrusions 109 protruding from the connection ring 106 in a radially inward direction.

The engagement feature 108 is configured for engaging a connection feature of the handheld power tool 12. More precisely, the two engagement protrusions 109 are configured for engaging corresponding connection features of the handheld power tool 12. For example, the engagement protrusions 109 may be configured to engage corresponding connection recesses or to extend over corresponding connection protrusions of the handheld power tool 12.

In the present example, the connection ring 106 is biased into a default rotational position by means of a biasing element. The default rotational position corresponds to an engaged position of the engagement feature 108.

Using the collection receptacle 14 and the handheld power tool 12, a method for coupling a collection receptacle 14 for workpiece particles to a handheld power tool 12 can be executed (cf. Figure 13, (c) to (a)).

It is obvious that this method may only be executed if the collection receptacle 14 and the handheld power tool 12 are provided in an uncoupled state (cf. Figure 13 (c)). It is additionally assumed that in this state, the closure element 72 is in its closed position. This means that the inlet port 26 is closed such that workpiece particles which may be present in the collection volume are blocked from leaving the collection receptacle 14 via the inlet port 26.

In a first step of the method, the inlet port 26 is connected to the handheld power tool 12 while the inlet port 26 is kept closed (cf. Figure 13 (b)).

Subsequently, i.e. in a state in which the inlet port is coupled to the handheld power tool 12, the inlet port 26 is opened by transferring the closure mechanism 70, i.e. the closure element 72, from its closed state into its open state (cf. Figure 13 (a)).

Consequently, the inlet port is ready for receiving a mixture of air and workpiece particles.

Additionally, a method for uncoupling a collection receptacle 14 for workpiece particles to a handheld power tool 12 can be executed (see also Figure 13, (a) to (c)).

It is obvious that this method may only be executed starting from a situation in which the collection receptacle 14 is coupled to the handheld power tool 12 (cf. Figure 13 (a)).

In a first step of this method, the inlet port 26 is closed. To this end, the closure element 72 is transferred from its open position into its closed position. Consequently, it is impossible for workpiece particles to leave the collection volume of the collection receptacle 14 via the inlet port 26 (cf. Figure 13 (b)).

Subsequently, the inlet port 26 is disconnected from the handheld power tool 12, i.e. the collection receptacle 14 is uncoupled from the handheld power tool 12 (cf. Figure 13 (c)).

The method for coupling a collection receptacle 14 for workpiece particles to a handheld power tool 12 and the method for uncoupling a collection receptacle 14 for workpiece particle and the handheld power tool 12 may be facilitated if the connection ring 106 and the closure element 72 are movably coupled.

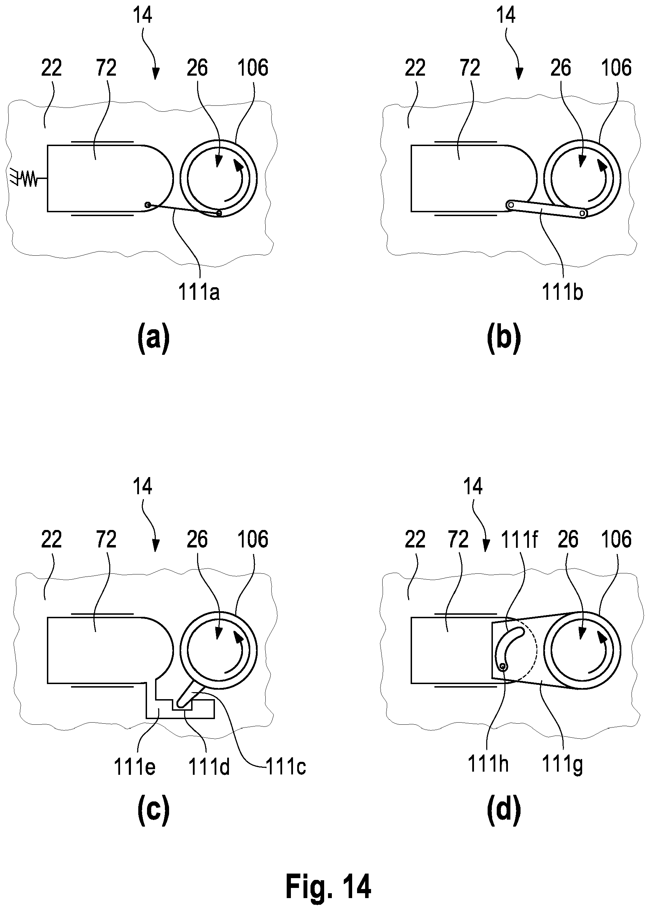

Figure 14 (a) schematically shows an example of the collection receptacle 14, wherein the connection ring 106 and the closure element 72 are movably coupled by a flexible element 111a such as a wire or a cord. The closure element 72 is represented in its open condition. The connection ring 106 is represented in a condition in which it may be coupled to the handheld power tool 12.

In this example, the closure element 72 is spring-biased into its open position.

If the connection ring 106 is turned in order to uncouple the collection receptacle 14 and the handheld power tool 12, the flexible element 111a is wound around the circumference of the connection ring 106, thereby moving the closure element 72 into its closed position.

In Figure 14 (a) the turning of the connection ring 106 is indicated by an arrow.

It is noted that the connection ring 106 and/or the closure element 72 need to be locked or blocked in the closed position in order to avoid undesired opening of the closure element 72 due to the spring-bias. A locking or blocking means may be provided to this end. The locking or blocking means may be configured to be released upon contact with an outlet port of the handheld power tool 12.

If the connection ring 106 is turned to couple the collection receptacle 14 and the handheld power tool 12, the connection ring 106 is turned against the direction indicated by the arrow in Figure 14 (a). This allows the closure element 72 to retract due to the spring-bias.

Figure 14 (b) schematically shows another example of the collection receptacle 14, wherein the connection ring 106 and the closure element 72 are movably coupled by a rod 11 1b.

As before, the closure element 72 is represented in its open condition. The connection ring 106 is represented in a condition in which it may be coupled to the handheld power tool 12.

If the connection ring 106 is turned in order to uncouple the collection receptacle 14 and the handheld power tool 12, the rod 111b pulls the closure element 72 into its closed position.

In Figure 14 (b) the turning of the connection ring 106 is indicated by an arrow.

If the connection ring 106 is turned to couple the collection receptacle 14 and the handheld power tool 12, the connection ring 106 is turned against the direction indicated by the arrow in Figure 14 (a). Consequently, the closure element 72 is pushed into its open position by the rod 111b.

Figure 14 (c) schematically shows a further example of the collection receptacle 14, wherein the connection ring 106 and the closure element 72 are movably coupled by a protrusion 111c being provided on the connection ring 106 and a notch 111d being arranged on an arm 111e of the closure element 72.

The protrusion 111c extends radially from the ring-shaped portion of the connection ring 106.

The arm 111e extends from a lower side of the remaining portions of the closure element 72 towards the connection ring 106. The notch 111d is arranged on an upper side of the arm 111e such that a tip of the protrusion 111c can be arranged in the notch 111d.

As before, the closure element 72 is represented in its open condition. The connection ring 106 is represented in a condition in which it may be coupled to the handheld power tool 12.

If the connection ring 106 is turned in order to uncouple the collection receptacle 14 and the handheld power tool 12, the protrusion 111c pulls the closure element 72 into its closed position by engaging the notch 11 1d.

In Figure 14 (c) the turning of the connection ring 106 is indicated by an arrow.

If the connection ring 106 is turned to couple the collection receptacle 14 and the handheld power tool 12, the connection ring 106 is turned against the direction indicated by the arrow in Figure 14 (c). Consequently, the closure element 72 is pushed into its open position by the protrusion 111c engaging the notch 11 1d.

Figure 14 (d) schematically shows another example of the collection receptacle 14, wherein the connection ring 106 and the closure element 72 are movably coupled by a slot 111f being provided on a coupling tab 111g connected to the connection ring 106 and a pin 111h being arranged on the closure element 72.

The coupling tab 111g extends radially from the ring-shaped portion of the connection ring 106.

On the coupling tab 111g a slot 111f is arranged. The slot 111f has a curved form. This means that the slot may be formed as a portion of a circle. However, other curved geometries may also be used to achieve a desired coupling characteristic between the closure element 72 and the connection ring 106 when the connection ring 106 is turned. In an example, the slot is formed as a portion of a spiral.

The pin 111h is arranged on the closure element 72. Moreover, the pin 111h is located in the slot 111f.

As before, the closure element 72 is represented in its open condition. The connection ring 106 is represented in a condition in which it may be coupled to the handheld power tool 12.

If the connection ring 106 is turned in order to uncouple the collection receptacle 14 and the handheld power tool 12, the closure element 72 is moved into its closed position by the pin 111h engaging the slot 111f. This is due to the fact that a radius of the slot 111f gets smaller along the direction of relative movement of the pin 11 1h.

In Figure 14 (d) the turning of the connection ring 106 is indicated by an arrow.

If the connection ring 106 is turned to couple the collection receptacle 14 and the handheld power tool 12, the connection ring 106 is turned against the direction indicated by the arrow in Figure 14 (d). Consequently, the closure element 72 is pushed into its open position by the pin 111h engaging the slot 111f.

It is noted that it is also possible to equip the coupling mechanisms as explained in connection with Figures 14 (a) to 14 (d) with a retardation element. Such an element would have the effect that the closure element 72 is moved into its open position only a certain time after the movement of the connection ring 106 has started. When moving the connection ring 106 for uncoupling the collection receptacle 14 and the handheld power tool 12, the closure element 72 would reach its closed position before the connection ring 106 is in a position to fully uncouple the collection receptacle 14 and the handheld power tool 12.

In the example of Figure 14 (a), such a retardation element may be realized by a predefined amount of slack of the flexible element 111a.

In the example of Figure 14 (b), the retardation element may be realized by supporting the rod 11 1b in an oblong hole. The oblong hole may have corners and curves.

In the example of Figure 14 (c), the retardation element may be realized by making the notch 111d wider than necessary for the engagement of the protrusion 111c. Furthermore, the notch 11 1d may be arranged on the arm 11 1e such that the protrusion 111c immediately contacts a wall of the notch 111d if the connection ring 106 is turned in a first direction and such that the protrusion 111c contacts a wall of the notch 111d only after a predefined rotational travel if the connection ring 106 is turned in a second direction.

In the example of Figure 14 (d), the retardation element may be realized by providing retardation sections in the slot 111f. In contrast to the form of the slot 111f as has been explained above, the retardation sections are shaped as a portion of a circle having the same center as the connection ring 106. Thus, if the pin 111h is in such a retardation section of the slot 111f and the connection ring 106 is turned, the closure element 72 does not move.

In all of the examples of Figure 14, the closure element 72 is guided such that it can move in a translatory manner only. This is illustrated by two lines on the inner side of the receptacle shell 22.

Besides the features that have already been mentioned, the receptacle shell 22 comprises a cup-shaped base part 110.

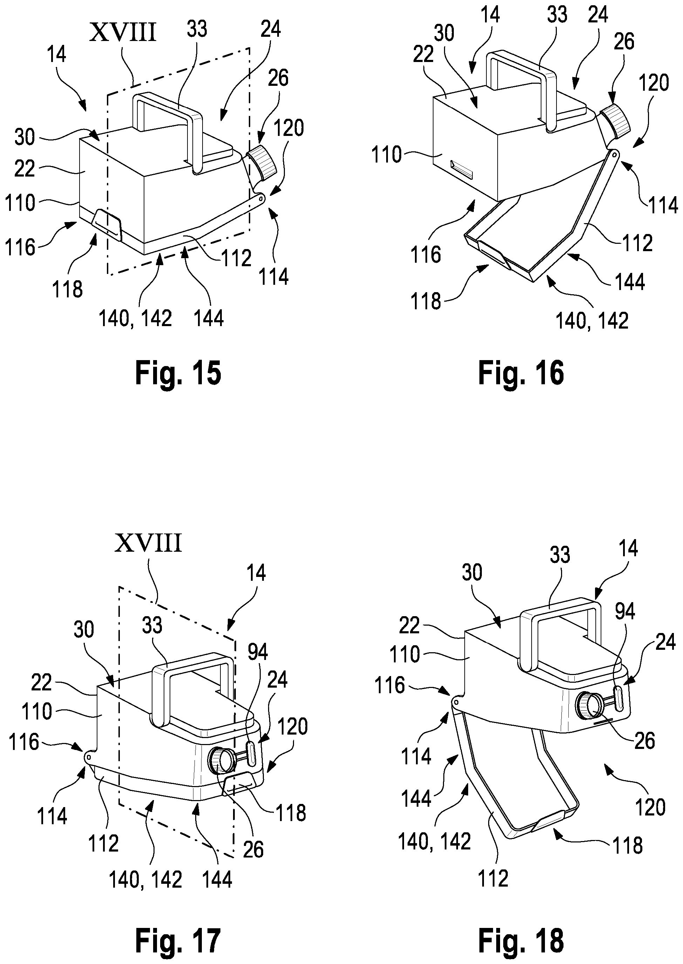

In the examples shown in the Figures, the base part 110 is obstacle-free in an opening direction of the cup-shape. In the example of Figures 15 and 16, the opening direction of the cup-shaped base part 110 extents downwards in an operating position of the container shell 22. Consequently, the fact that the base part 110 is obstacle-free in this direction means that it does not comprise any geometric features which could block an object, e.g. workpiece particles, translating from the interior of the cup-shaped base part 110 towards an outside of the cup-shaped base part 110 along this direction. The base part 110 especially does not comprises steps, sloping surfaces or edges that could block workpiece particles from leaving the collection volume.

The first side 24, the second side 30 and the lid 56 which have been explained before, form part of the cup-shaped base part 110.

Moreover, the receptacle shell 22 comprises a lid part 112. In the present example, the lid part 112 is shaped like a flat tray.

The lid part 112 is a self-sustainingly rigid component which is movably connected to the base part 110 by means of a hinge 114.

In the present example, the lid part 112 forms a bottom side of the receptacle shell 22 if the collection receptacle 14 is in an operational position.

Thus, the lid part 112 is arranged opposite the handle 33 which is arranged on the base part 110 and opposite the filter means 32 which is also arranged on the base part 110.

Moreover, using the hinge 114, the lid part 112 can selectively assume a closed position in which the collection volume is fully enclosed by the base part 110 and the lid part 112. This is shown in Figure 15. Additionally, the lid part 112 can selectively assume an open position in which the collection volume is accessible. This is shown in Figure 16.

Thus, the lid part 112 may be transferred into its open position in order to empty the collection receptacle 14, i.e. in order to eliminate workpiece particles from the collection volume of the collection receptacle 14.

In the example of Figures 15 and 16, the hinge 114 is arranged at a proximal end 120 of the lid part 112 with respect to the first side 24. This means that the hinge 114 is arranged at the end of the lid part 112 which is arranged adjacent to the first side. As has been mentioned before, the collection receptacle 14 may be grabbed by the handle 33 when emptying the collection volume.

The collection receptacle 14 additionally comprises a securing means 118.

The securing means 118 is configured for securing the lid part 112 on the base part 110 in the closed position of the lid part 112.

The securing means 118 and the hinge 114 are arranged at opposite ends of the lid part 112. In other words, the securing means 118 is arranged at a distal end 116 of the lid part 112 with respect to the first side 24. This means that the securing means 118 is arranged at the end of the lid part 112 being arranged remote from the first side 24.

Moreover, with respect to a width direction of the collection receptacle 14, the securing means 118 is arranged centrally. The width direction refers to an operational position of the collection receptacle 14 in which the width extends in a horizontal direction orthogonal to a work direction.

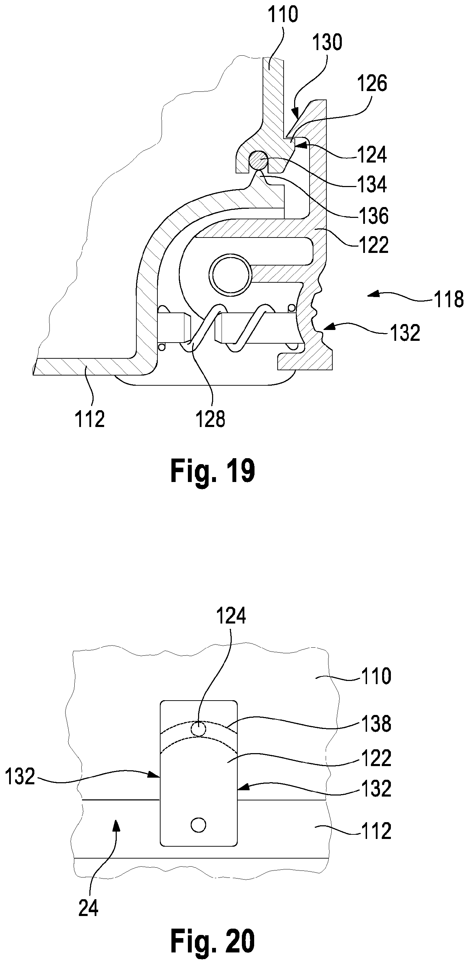

The securing means 118 is shown in more detail in Figure 19.

In the example shown in this Figure, the securing means 118 comprises a hook part 122 which is pivotably supported on the lid part 112. The pivot axis extends substantially parallel to the first side 24.

On the base part 110, there is provided an engagement feature 124 which comprises an engagement surface 126.

The hook part 122 can assume a locked position, if the lid part 112 is in its closed position. In such a situation, the engagement feature 124, more precisely the engagement surface 126 is engaged by the hook part 122. Consequently, the lid part 112 is not able to pivot with respect to the base part 110.

The hook part 122 can also assume and unlocked position, if the lid part is in its closed position. In such a situation, the engagement feature 124, more precisely the engagement surface 126, is not engaged by the hook part 122. Consequently, the lid part 112 is free to pivot with respect to the base part 110.

In the present example, the hook part 122 is resiliently biased towards the locked position by a spring 128. Consequently, in the absence of external forces, if the lid part 112 is in its closed position, the hook part 122 is in the locked position such that the lid part 112 is not able to pivot.

The hook part 112 additionally comprises a mounting slope 130. The mounting slope 130 is oriented towards the base part 110 and is provided at the free end of the hook part 122. Thus, if the lid part 112 is in its open condition and the hook part 122 is in the locked position, the lid part 112 may be moved into its closed position and the hook part 122 is brought into engagement with the engagement feature 124 by sliding along the mounting slope 130.

In the present example, the hook part 122 may be manually actuated.

To this end, the hook part 122 comprises an actuation surface 132.

The actuation surface 132 is oriented towards an exterior of the receptacle shell 22 such that it is easily accessible by a human finger or hand.

Moreover, the actuation surface 132 and the engagement feature 124 are arranged on opposite sides of the pivot axis of the hook part 122. Consequently, the hook part 122 may be moved into the unlocked position by pushing on the actuation surface 132. It is understood that in this context, the hook part 122 needs to be pushed against the force of the spring 128.

Additionally, the collection receptacle 14 is equipped with a sealing means 134. In the present example, the sealing means 134 is arranged on the base part 110, such that a counter-sealing feature 136 of the lid part 112 abuts against the sealing means 134 if the lid part 112 is in its closed position. In other words, in the closed position of the lid part, the sealing means 134 is interposed between the lid part 112 and the base part 110. Consequently, workpiece particles are reliably kept in the collection volume.

Figures 17 and 18 show an alternative example of a collection receptacle 14, comprising the base part 110 and the lid part 112. In the following, only the differences with respect to the example of Figures 15 and 16 will be explained.

In the example of Figures 17 and 18, the locations at which the hinge 114 and the securing means 118 are arranged, are inverted. This means, that in the example of Figures 17 and 18, the hinge 114 is arranged at the distal end 116 of the lid part 112 and the securing means 118 is arranged at the proximal end 120 of the lid part 112 with respect to the first side 24.

In the remaining aspects, especially as far as the features of the securing means 118 are concerned, the collection receptacle 14 of Figures 17 and 18 is similar to the collection receptacle 14 of Figures 15 and 16.

Figure 20 shows an alternative configuration of the securing means 118 and a corresponding engagement feature 124.

As before, the hook part 122 is pivotably connected to the lid part 112. However, now the pivot axis extends substantially perpendicular to a side wall of the receptacle shell 22, in the present case the first side 24.

Moreover, the hook part 112 comprises a curved notch 138 which is oriented towards the first side 24 of the receptacle shell 22, i.e. the base part 110.

On the base part 110, the engagement feature 124 is provided which has the form of a protrusion which can be selectively received inside the notch 138.

In this example, the hook part 122 comprises two actuation interfaces 132 such that the hook part 122 can be pivoted around the pivot axis such that it can be selectively brought into engagement with the engagement feature 124.

It is noted that in all of the above examples, the arrangement of the hook part 122 and the corresponding engagement feature 124 may be kinematically inverted. This means that in alternative solutions, the hook part 122 may be arranged on the base part 110 and the engagement feature 124 may be provided on the lid part 112.

As has already been mentioned in connection with Figure 1, the collection receptacle 14 may be supported on the guide rail 16.

To this end, the collection receptacle 14 comprises a support means 140 being arranged on the receptacle shell 22.

In the example of Figure 1, the support means 140 comprises a sliding surface 142.

The sliding surface 142 is arranged on a lower side 144 of the receptacle shell 22, if the receptacle shell 22 is in an operational position.

The sliding surface 142 is essentially formed by the entire lower side 144 of the receptacle shell 22. More precisely, as has been explained before, the sliding surface 142 is formed by the lower side 144 of the lid part 112.

The sliding surface 142 is configured for supporting the receptacle shell 22 on the guide rail 16. More precisely, the sliding surface 142 may slide on a counter-surface of the guide rail 16.

Thus, when performing an operation using the handheld power tool 12 to which the collection receptacle 14 is connected, the collection receptacle 14 slides on the guide rail 16.

It is noted that due to the fact that the coupling between the inlet port 26 and the handheld power tool 12 may have a rotational degree of freedom, the collection receptacle 14 does not hinder the handheld power tool 12 from being inclined, e.g. for making a bevel cut. In Figure 1, the handheld power tool 12, i.e. the circular hand saw, is shown in a configuration in which it may generate a bevel cut.

The rotational degree of freedom may be provided by allowing the inlet port 26 to rotate with respect to the receptacle shell 22.

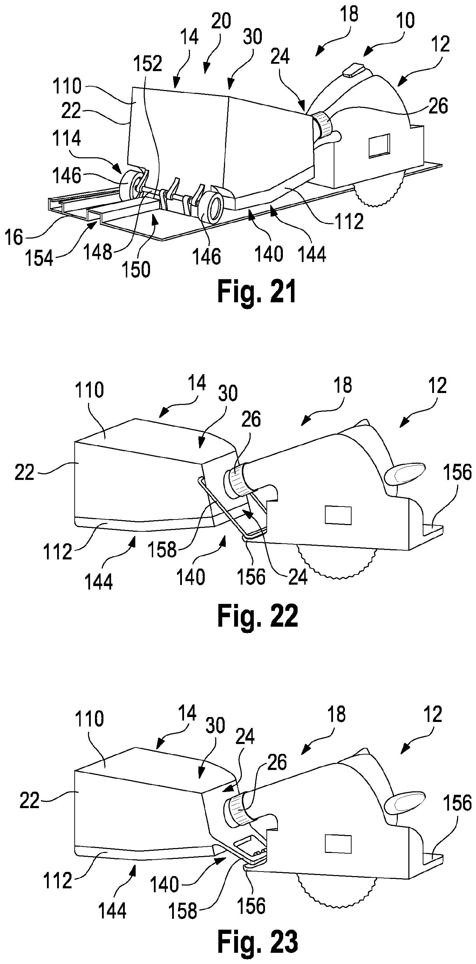

Figure 21 shows a further example of a collection receptacle 14 being coupled to a handheld power tool 12. This example differs from the example of Figure 1 in that the support means 140 is designed in accordance with an alternative. As before, the support means 140 is configured for supporting the receptacle shell 22 on a guide rail 16.

However, in the example of Figure 21, the support means 140 comprises two wheels 146 which are arranged on a common axle 148. Thus, the wheels 146 are rotatably supported on the receptacle shell 22. Moreover, the wheels 146 are configured for rolling on the guiderail 16.

In the present example, the two wheels 146 are arranged at an end of the receptacle shell 22 which is arranged opposite to the first side 24. In other words, the wheels 146 are arranged at a distal end 116 of the receptacle shell 22 with respect to the first side 24 or with respect to the handheld power tool 12.

In the example of Figure 21, the axle 148 fulfills a double functionality. As has been mentioned before, the axle 148 rotatorily supports the wheels 146 on the receptacle shell 22. Additionally, the axle 148 forms part of the hinge 114 by which the base part 110 and the lid part 112 are pivotably connected.

The support means 140 comprises a guiding means 150. The guiding means 150 is configured for laterally guiding the receptacle shell 22 on the guiderail 16. Again, the lateral direction is determined with respect to a work flow direction.

In the present example, the guiding means 150 comprises a notch 152 which extends over the entire lower side 144 of the receptacle shell 22. Consequently, the notch 152 extends along a longitudinal direction of the collection receptacle 14 which extends in parallel to the work flow direction.

The notch 152 is configured to receive a rib 154 of the guiderail 16. The rib 154 and the notch 152 are sized such that the rib 154 may be received in the notch 152 with little play.

Consequently, the collection receptacle 14 may move along the rib 154. Movements in a transverse direction are prevented or at least reduced to a minimum.

It is understood that the examples of Figure 1 and Figure 21 may be combined. For example, the guiding means 150 of the example of Figure 21 may as well be used in the example of Figure 1.

A further example of the collection receptacle 14 is shown in Figure 22. As before, this collection receptacle 14 differs from the other collection receptacles 14 by its support means 140.

In contrast to the example of Figure 21, in the example of Figure 22 the support means 140 is configured for supporting the receptacle shell 22 on a base plate 156 of the handheld power tool 12.

Such a base plate 156 is configured for positioning the handheld power tool 12 on a workpiece or on a guide rail 16.

In the example of Figure 22, the support means 140 comprises a support bracket 158 which is pivotably supported on the receptacle shell 22. More precisely, the support bracket 158 is pivotably supported on the base part 110 of the receptacle shell 22.

In a case in which the collection receptacle 14 is coupled to a handheld power tool 12, as shown in Figure 22, the support bracket 158 may be supported on the base plate 156. Optionally, the support bracket 158 may be secured on the base plate 156.

Due to the fact that in the example of Figure 22, the support bracket 158 is pivotably supported on the receptacle shell 22, the support bracket 158 can be used in different angular positions if the collection receptacle 14 is used in combination with different handheld power tools 12.

Figure 23 shows a further example of a collection receptacle 14 being coupled to a handheld power tool 12. As before, the collection receptacle 14 differs from the previous examples by the support means 140.

As in the example of Figure 22, the support means 140 comprises a support bracket 158.

However, in contrast to the example of Figure 22, the support bracket 158 now is rigidly connected to the receptacle shell 22. Thus, the support bracket 158 may not be moved with respect to the receptacle shell 22.

Moreover, the support bracket 158 is integrally formed with the receptacle shell 22 in the example of Figure 23. More precisely, the support bracket 158 is integrally formed with the base part 110.

As before, the support bracket 158 may be supported on the base plate 156 if the collection receptacle 14 is coupled to a handheld power tool 12, as shown in Figure 23. Optionally, the support bracket 158 may be secured on the base plate 156.

It is noted that in the examples of Figures 22 and 23, a certain flexibility may be provided in the surroundings of the inlet port 26 or by the inlet port 26. In such a case, the inlet port 26 may be pivotable around an axis extending transverse to a standard working direction. In this context, the inlet port 26 may be pivoted around a portion of the collection receptacle 14.

A Standard working direction may be a direction perpendicular to the axis 148 of the wheel 146 and/or the guiding means 150, e.g. the notch 152, of the support means 140. Additionally or alternatively, the standard working direction is perpendicular to a portion of the support bracket 158 configured to be attached to handheld power tool 12.

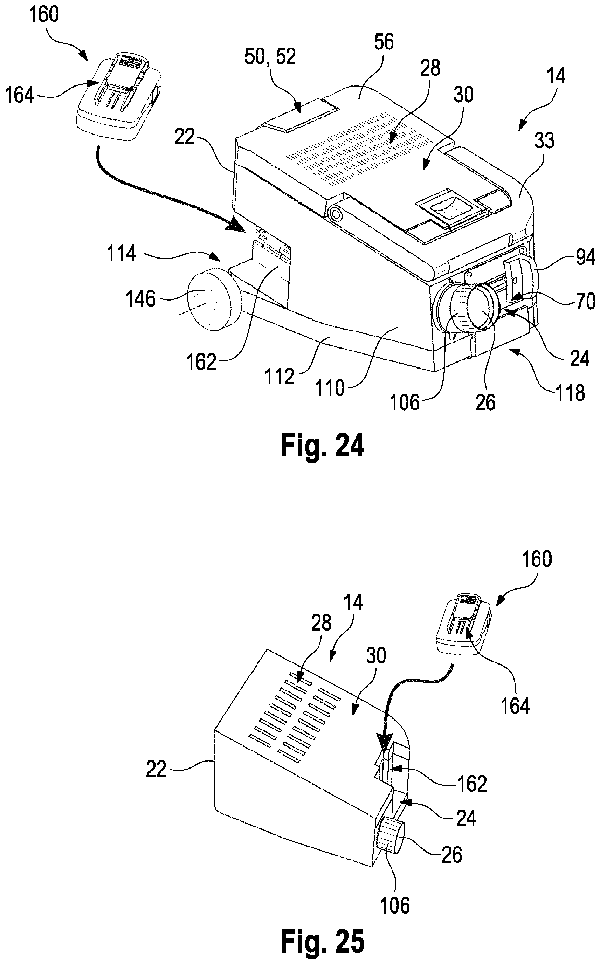

Figure 24 shows a collection receptacle 14 according to another embodiment in a partially exploded representation.

The collection receptacle 14 of Figure 24 comprises an energy source module 160 which comprises an energy source formed by an electric battery.

The energy source module 160 is formed as a component separate from the receptacle shell 22, which is selectively couplable to the receptacle shell 22 and selectively decouplable from the receptacle shell 22. To this end, a receptacle shell connection interface 162 is arranged on a lateral side of the receptacle shell 22. The lateral side is defined with respect to a standard working direction. An energy source module connection interface 164 is provided on the energy source module 160.

Both the receptacle shell connection interface 162 and the energy source module connection interface 164 are combined mechanical and electrical interfaces. Moreover, the receptacle shell connection interface 162 and the energy source module connection interface 164 are configured to be connected to one another. This applies in a mechanical sense and in an electrical sense. Thus, through the energy source module connection interface 164, the energy source module 160 may be mechanically connected to the receptacle shell connection interface 162 of the receptacle shell 22 and electrically connected to one or more electric consumers, e.g. the electric motor 62 and/or the electric valve actuator 66, arranged on the receptacle shell 22.

In the embodiment of Figure 24, the receptacle shell connection interface 162 and the energy source module connection interface 164 are configured to be slidingly connected and slidingly disconnected from one another. Thus, in order to couple the energy source module 160 to the receptacle shell 22, the energy source module connection interface 164 is slid with respect to the receptacle shell connection interface 162 along a first direction. In the present example, the first direction is substantially parallel to the standard working direction. In order to disconnect the energy source module 160 from the receptacle shell 22, the energy source module connection interface 164 is slid with respect to the receptacle shell connection interface 162 along a second direction opposing the first direction. The energy source module 160 is accessible from a rear side of the collection receptacle 14 when the collection receptacle 14 is coupled to the handheld power tool 12.

When coupled to the receptacle shell 22, the electric battery of the energy source module 160 may be used to power the suction means 58 and/or the reflow valve 64.

It is noted that the energy source module 160 is separate from a battery unit of the handheld power tool 12.

In addition, reference is made to the explanations provided in connection with the remaining Figures, in particular Figure 2 and Figure 21.

Figure 25 shows a collection receptacle 14 according to still another embodiment.

The collection receptacle 14 of Figure 25 also comprises an energy source module 160 which comprises an energy source being formed by an electric battery.

As has already been explained in connection with the embodiment of Figure 24, the energy source module 160 is formed as a component separate from the receptacle shell 22. Moreover, the energy source module 160 is selectively couplable to the receptacle shell 22 and selectively decouplable from the receptacle shell 22 using the receptacle shell connection interface 162 and the energy source module connection interface 164. Reference is made to the above explanations concerning the embodiment of Figure 24.

In contrast to the embodiment of Figure 24, the receptacle shell connection interface 162 is arranged on or proximal the first side 24 of the receptacle shell 22. This means that the receptacle shell connection interface 162 and the inlet port 26 are arranged on the same side of the receptacle shell 22.

In contrast to the embodiment of Figure 24 the receptacle shell connection interface 162 is oriented such that the first direction along which the energy source module connection interface 164 is slid with respect to the receptacle shell connection interface 162 extends downwards, if the collection receptacle 14 is in an operational position. Consequently, the second direction extends upwards. Thus, the energy source module 160 is accessible from a top side of the collection receptacle 14, even if the collection receptacle 14 is coupled to the handheld power tool 12.

In addition, reference is made to the explanations provided in connection with the remaining Figures, in particular Figure 24.

### List of reference signs

- 10: handheld power tool system
- 12: handheld power tool
- 14: collection receptacle for workpiece particles
- 16: guide rail
- 18: handheld power tool assembly
- 20: particle collection assembly
- 22: receptacle shell
- 24: first side of the receptacle shell
- 26: inlet port
- 28: outlet
- 30: second side of the receptacle shell
- 31: transparent section
- 32: filter means
- 33: handle
- 34: filter dedusting mechanism
- 36: first excitation element
- 38: second excitation element
- 40: first protrusion
- 42: second protrusion
- 44: linear guiding rod
- 46: opening
- 48: opening
- 50: gripping means
- 52: gripping portion
- 54: actuation rod portion
- 56: lid
- 58: suction means
- 60: fan
- 62: electric motor
- 64: reflow valve
- 66: electric valve actuator
- 68: pressure sensor
- 70: closure mechanism
- 72: closure element
- 74: closure element housing
- 76: main wall
- 78: opening
- 80: lower lateral wall
- 81: guiding means
- 82: upper lateral wall
- 84: left lateral wall
- 86: right lateral wall
- 88: abutment means
- 90: particle removal opening
- 92: pocket
- 94: gripping means
- 96: connection portion of the gripping means
- 98: oblong hole
- 99: flow diverter
- 100: curved oblong hole
- 102: connection arm
- 104: connection mechanism
- 106: connection ring
- 108: engagement feature
- 109: engagement protrusion
- 110: cup-shaped base part
- 111a: flexible element
- 111b: rod
- 111c: protrusion
- 111d: notch
- 111e: arm
- 111f: slot
- 111g: coupling tab
- 111h: pin
- 112: lid part
- 114: hinge
- 116: distal end
- 118: securing means
- 120: proximal end
- 122: hook part
- 124: engagement feature
- 126: engagement surface
- 128: spring
- 130: mounting slope
- 132: actuation surface
- 134: sealing means
- 136: counter-sealing feature
- 138: curved notch
- 140: support means
- 142: sliding surface
- 144: lower side
- 146: wheel
- 148: axle
- 150: guiding means
- 152: notch
- 154: rib
- 156: base plate
- 158: support bracket
- 160: energy source module
- 162: receptacle shell connection interface
- 164: energy source module connection interface

## Claims

1. A collection receptacle (14) for collecting workpiece particles, the collection receptacle (14) configured for coupling to a handheld power tool (12), the collection receptacle (14) comprising
a mechanically rigid receptacle shell (22) having an inlet port (26) on a first side (24) of the receptacle shell (22) and an outlet (28) on a second side (30) of the receptacle shell (22), wherein the rigid receptacle shell (22) delimits a collection volume of the collection receptacle (14), wherein the receptacle shell (22) is configured to be rigidly or pivotably coupled to the handheld power tool (12), wherein the inlet port (26) is configured to receive a mixture of air and workpiece particles, and wherein the outlet (28) is configured to allow air to leave the collection volume delimited by the receptacle shell (22),
a filter means (32) being disposed at the outlet (28) and configured to separate workpiece particles from air, and
a filter dedusting mechanism (34) configured to remove workpiece particles from the filter means (34), wherein the filter dedusting mechanism (34) is coupled with the filter means (32).

2. The collection receptacle (14) of claim 1, wherein the filter means (32) comprises a sheet-like filter element wherein the sheet-like filter element is either flat or pleated.

3. The collection receptacle (14) of any one of the preceding claims, further comprising a suction means (58) configured to suck air and/or workpiece particles from the inlet port (26) towards the outlet (28).

4. The collection receptacle (14) of claim 3, wherein the suction means (58) is arranged on an external side of the filter means (32), and wherein the dedusting mechanism (34) comprises a reflow valve (64) being configured to selectively open a bypass flow path by-passing the filter element and fluidically connecting an inlet of the suction means (58) to an environment of the collection receptacle (14).

5. The collection receptacle (14) of claim 4, wherein the reflow valve (64) is coupled with an electric valve actuator (66).

6. The collection receptacle (14) of claim 4 or 5, wherein the receptacle shell (22) comprises a lid (56) for selectively accessing the filter means (32), and wherein at least one of the reflow valve (64) and the electric valve actuator (66) is arranged on the lid (56).

7. The collection receptacle (14) of any one of claims 1 to 3, wherein the filter dedusting mechanism (34) comprises an excitation element (36, 38) configured to at least locally contact the filter means (32) and at least locally subject the filter means (32) to a mechanical excitation and/or movement.

8. The collection receptacle (14) of claim 7, wherein the excitation element (36, 38) extends over at least 80% of a width of the filter means (32).

9. The collection receptacle (14) of claim 7 or 8, wherein the excitation element (36, 38) comprises at least one protrusion (40, 42) configured for selectively contacting the filter means (32).

10. The collection receptacle (14) of any one of claims 7 to 9, wherein the excitation element (36, 38) is coupled to a gripping means (50) for manually actuating the excitation element (36, 38).

11. The collection receptacle (14) of any one of claims 7 to 10, wherein the receptacle shell (22) comprises a lid (56) for selectively accessing the filter means (32), wherein at least one of the excitation element (36, 38) and the gripping means (50) is arranged on the lid (56).

12. A method for operating a collection receptacle (14) according to any one of the preceding claims, the method comprising
- detecting that a dedusting criterion is fulfilled, and
- triggering an operation of the dedusting mechanism (34) or operating the dedusting mechanism (34).

13. The method of claim 12, wherein the dedusting criterion comprises at least one of
- a pressure difference over the filter means (32) exceeding a predefined pressure threshold,
- an operation time of the collection receptacle (14) exceeding a predefined time threshold,
- a volumetric flow rate over the filter means (32) dropping below a predefined flow rate threshold, and
- a filtering performance of the filter means (32) dropping below a predefined filtering performance threshold.

14. A handheld power tool assembly (18) comprising a handheld power tool (12) and a collection receptacle (14) according to any one of claims 1 to 11.

15. The handheld power tool assembly (18) of claim 14, wherein the handheld power tool (12) comprises a battery unit for powering at least the handheld power tool (12).
